# EUROPEAN PATENT APPLICATION

(11) **EP 4 400 911 A1**
(43) Date of publication of application: **17.07.2024**
(21) Application number: 21957870.5
(22) Date of filing: 24.09.2021
(51) Int. Cl.: G03B 21/20, G02B 27/01

(54) **PROJECTION DISPLAY SYSTEM AND FULL-COLOR PROJECTION LIGHT MACHINE**

(71) Applicant: Huawei Technologies Co., Ltd., Shenzhen, Guangdong 518129 (CN)
(72) Inventor: LUO, Kun, Shenzhen, Guangdong 518129 (CN); ZHAO, Pengfei, Shenzhen, Guangdong 518129 (CN); JIANG, Congbiao, Shenzhen, Guangdong 518129 (CN)
(74) Representative: Maiwald GmbH
(86) International application number: PCT/CN2021/120265
(87) International publication number: WO 2023/044736

(57) **Abstract**

A projection display system (200) and a full-color projection optical engine (1300) are disclosed. The projection display system (200) includes a red light-emitting pixel array (201), a blue light-emitting pixel array (203), a green light-emitting pixel array (202), and a light-combining prism (204). The light-combining prism (204) is disposed in optical paths of red light emitted by the red light-emitting pixel array (201), blue light emitted by the blue light-emitting pixel array (203), and green light emitted by the green light-emitting pixel array (202). Pixel dimensions of the blue light-emitting pixel array (203) and pixel dimensions of the green light-emitting pixel array (202) are both smaller than pixel dimensions of the red light-emitting pixel array (201). At least one group of pixel expansion apparatuses (205) is disposed between the red light-emitting pixel array (201) and the light-combining prism (204). The at least one group of pixel expansion apparatuses (205) is configured to obtain expanded red light based on the red light, where resolution of an image obtained based on the expanded red light is n times resolution of an image obtained based on the red light, and n > 1. The light-combining prism (204) is configured to: combine the expanded red light, the blue light, and the green light, and emit combined light along a same direction. On the premise of ensuring that the projection optical engine (1300) is small in volume, the projection display system (200) not only can ensure light-emitting efficiency but also is capable of not reducing display resolution.

## Description

### TECHNICAL FIELD

This application relates to augmented reality (augmented reality, AR) optical engine technologies, and in particular, to a projection display system and a full-color projection optical engine.

### BACKGROUND

AR is a display technology in which real-world information is collected in real time, and virtual information, images, and the like are combined with the real world. AR terminals have the potential to become next-generation information exchange terminals after personal computers and smart phones, enjoying a large market size and vast room for imagination.

Compared with aspects such as communication, big data, and software algorithms, performance of AR hardware display systems at a current stage restricts development of the AR technology to some extent. The AR hardware display system usually includes two parts: an optical engine (optical engine) (also referred to as a projection optical engine) and an optical combiner (optical combiner). The projection optical engine is a device configured to generate light that forms images. A volume and form of the projection optical engine severely affect a volume of the AR hardware display system.

However, a small volume, high efficiency, and a large field of view of the projection optical engine restrict each other. Therefore, how light-emitting efficiency and resolution are balanced on the premise of ensuring that the projection optical engine is small in volume is an urgent problem to be resolved.

### SUMMARY

This application provides a projection display system and a full-color projection optical engine, not only to ensure light-emitting efficiency but also not to reduce display resolution on the premise of ensuring that a projection optical engine is small in volume.

According to a first aspect, this application provides a projection display system. The projection display system includes a red light-emitting pixel array, a blue light-emitting pixel array, a green light-emitting pixel array, and a light-combining prism. The light-combining prism is disposed in optical paths of red light emitted by the red light-emitting pixel array, blue light emitted by the blue light-emitting pixel array, and green light emitted by the green light-emitting pixel array. Pixel dimensions of the blue light-emitting pixel array and pixel dimensions of the green light-emitting pixel array are both smaller than pixel dimensions of the red light-emitting pixel array. At least one group of pixel expansion apparatuses is disposed between the red light-emitting pixel array and the light-combining prism. The at least one group of pixel expansion apparatuses is configured to obtain expanded red light based on the red light, where resolution of an image obtained based on the expanded red light is n times resolution of an image obtained based on the red light, and n > 1. The light-combining prism is configured to: combine the expanded red light, the blue light, and the green light, and emit combined light along a same direction.

The pixel expansion apparatus includes a polarization apparatus and a beam shifter. When being driven by an electrical signal, the polarization apparatus may convert first polarized light into light that is in another polarized state, that is, second polarized light. In a possible implementation, the polarization apparatus is of a three-layer structure: a transparent electrode + a liquid crystal molecular layer + a transparent electrode. When an appropriate electrical signal is applied to the transparent electrodes, liquid crystal molecules in the liquid crystal molecular layer rotate, to convert a polarized state of incident polarized light.

The beam shifter may be a transparent birefringent plate of specific thickness. When incident light (the second polarized light) is incident on the birefringent plate, birefringence occurs, and the incident light is split into two polarized light rays with vibration directions perpendicular to one another. One of the light rays obeys the laws of normal refraction, and is referred to as ordinary light (o-light). The other light ray does not obey the laws of normal refraction, and is referred to as extraordinary light (e-light). The o-light passes through the birefringent plate along an original propagation direction and emerges. The e-light responds to birefringence, is refracted once on each of an incident surface and an emergent surface of the birefringent plate, and then emerges. A direction of the emerging e-light is parallel to a direction of the emerging o-light, and there is a displacement of d between the emerging e-light and the emerging o-light. It should be understood that if the incident light has characteristics of both the o-light and the e-light, birefringence may occur in the birefringent plate, and both the o-light and the e-light emerge; if the incident light has characteristics of only the o-light, the o-light emerges after birefringence occurs in the birefringent plate; and if the incident light has characteristics of only the e-light, the e-light emerges after birefringence occurs in the birefringent plate.

In a possible implementation, the at least one group of pixel expansion apparatuses is configured to perform different polarization on the red light at a plurality of moments to obtain red light that is in a plurality of polarized states, optical paths of the red light that is in a plurality of polarized states are parallel but do not coincide, and the expanded red light includes the red light that is in a plurality of polarized states.

Optionally, when there is only one group of pixel expansion apparatuses, the group of pixel expansion apparatuses is configured to perform first polarization on the red light at a first moment to obtain ordinary light, and perform second polarization on the red light at a second moment to obtain extraordinary light; and the expanded red light includes the ordinary light and the extraordinary light.

Through processing performed by one group of pixel expansion apparatuses, two stable polarized red light beams can be obtained. For the red light, red light in a first polarized state (o-light) obtained at a moment t1 and red light in a second polarized state (e-light) obtained at a moment t2 are parallel but do not coincide. It is equivalent to that from the moment t1 to the moment t2, a phenomenon can be obtained that the red light in the first polarized state and the red light in the second polarized state are combined through superimposition. In this way, resolution of an image formed by the red light doubles, implementing pixel expansion.

Optionally, when there are two groups of pixel expansion apparatuses, the two groups of pixel expansion apparatuses are configured to perform first polarization on the red light at a first moment to obtain red light that is in a first polarized state, perform second polarization on the red light at a second moment to obtain red light that is in a second polarized state, perform third polarization on the red light at a third moment to obtain red light that is in a third polarized state, and perform fourth polarization on the red light at a fourth moment to obtain red light that is in a fourth polarized state; and the expanded red light includes the red light that is in the first polarized state, the red light that is in the second polarized state, the red light that is in the third polarized state, and the red light that is in the fourth polarized state.

Through processing performed by two groups of pixel expansion apparatuses, four stable polarized red light beams can be obtained. For the red light, red light in a second polarized state (o-light) is obtained at a moment t1, red light in a fourth polarized state (o-light) is obtained at a moment t2, red light in a sixth polarized state (e-light) is obtained at a moment t3, and red light in an eighth polarized state (e-light) is obtained at a moment t4. It is equivalent to that from the moment t1 to the moment t4, a phenomenon can be obtained that the red light in the second polarized state, the red light in the fourth polarized state, the red light in the sixth polarized state, and the red light in the eighth polarized state are combined through superimposition. In this way, resolution of an image formed by the red light quadruples, implementing pixel expansion.

In this embodiment of this application, with at least one group of pixel expansion apparatuses disposed between the red light-emitting pixel array and the light-combining prism, the resolution of the image obtained based on the red light can be increased by a factor of n. Therefore, when it is ensured that an overall size of RGB self-emitting panels remains unchanged, pixel dimensions of the red self-emitting panel may be increased, improving light-emitting efficiency of the red self-emitting panel. Then, through processing performed by the at least one group of pixel expansion apparatuses, the resolution of the image obtained based on the red light can be increased. In this way, even if the resolution of the image formed by the red light decreases due to an increase in the pixel dimensions, the resolution of the image formed by the red light is increased back through processing performed by the at least one group of pixel expansion apparatuses. Therefore, on the premise of ensuring that the projection display system is small in volume, this not only ensures the resolution of the image formed by the red light, but also improves the light-emitting efficiency of the red self-emitting panel, and even light-emitting efficiency of the entire projection display system.

Optionally, an optical path length compensation device is disposed between the green light-emitting pixel array and the light-combining prism, and/or an optical path length compensation device is disposed between the blue light-emitting pixel array and the light-combining prism. The optical path length compensation device is configured to adjust a length of an optical path of incident light. The incident light includes the green light or the blue light.

Optionally, a distance between the blue light-emitting pixel array and the light-combining prism is changeable, and/or a distance between the green light-emitting pixel array and the light-combining prism is changeable.

Either the optical path length compensation device or distance adjustment can implement a purpose of adjusting a length of an optical path of the green light and/or the blue light.

In a possible implementation, the red light-emitting pixel array includes a self-emitting panel and a polarization selection device, or the red light-emitting pixel array includes a self-emitting panel, a quantum dot material, and a polarization selection device, or the red light-emitting pixel array includes a self-emitting panel and a quantum rod material. The self-emitting panel includes a micron light-emitting diode panel or a micron organic light-emitting diode.

In a possible implementation, an optical engine lens is further included. The optical engine lens is configured to receive the combined light emitted from the light-combining prism, magnify an image formed by the combined light, and project a magnified image.

According to a second aspect, this application provides a projection display system. The projection display system includes a red light-emitting pixel array, a blue light-emitting pixel array, a green light-emitting pixel array, and a light-combining prism. The light-combining prism is disposed in optical paths of red light emitted by the red light-emitting pixel array, blue light emitted by the blue light-emitting pixel array, and green light emitted by the green light-emitting pixel array. The light-combining prism is configured to: combine the red light, the blue light, and the green light, and emit combined light along a same direction. At least one group of pixel expansion apparatuses is disposed in an optical path of the combined light emitted by the light-combining prism. The at least one group of pixel expansion apparatuses is configured to obtain expanded combined light based on the combined light, where resolution of an image obtained based on the expanded combined light is n times resolution of an image obtained based on the combined light, and n > 1.

In this embodiment of this application, with the at least one group of pixel expansion apparatuses disposed in the optical path of the combined light emitted by the light-combining prism, the resolution of the image obtained based on the combined light can be increased by a factor of n. In this way, pixel dimensions of a self-emitting panel can be increased with the resolution of the image formed by the combined light not reduced, resolving a problem that small pixel dimensions cannot be implemented due to process constraints, and reducing difficulty of a process. In addition, on the premise of not changing pixel dimensions, the resolution of the image formed by the combined light can be increased.

In a possible implementation, the at least one group of pixel expansion apparatuses is configured to perform different polarization on the combined light at a plurality of moments to obtain combined light that is in a plurality of polarized states, optical paths of the combined light that is in a plurality of polarized states are parallel but do not coincide, and the expanded combined light includes the combined light that is in a plurality of polarized states.

Optionally, when there is only one group of pixel expansion apparatuses, the group of pixel expansion apparatuses is configured to perform first polarization on the combined light at a first moment to obtain ordinary light, and perform second polarization on the combined light at a second moment to obtain extraordinary light; and the expanded combined light includes the ordinary light and the extraordinary light.

Optionally, when there are two groups of pixel expansion apparatuses, the two groups of pixel expansion apparatuses are configured to perform first polarization on the combined light at a first moment to obtain combined light that is in a first polarized state, perform second polarization on the combined light at a second moment to obtain combined light that is in a second polarized state, perform third polarization on the combined light at a third moment to obtain combined light that is in a third polarized state, and perform fourth polarization on the combined light at a fourth moment to obtain combined light that is in a fourth polarized state; and the expanded combined light includes the combined light that is in the first polarized state, the combined light that is in the second polarized state, the combined light that is in the third polarized state, and the combined light that is in the fourth polarized state.

In a possible implementation, the pixel expansion apparatus includes a polarization apparatus and a beam shifter. The polarization apparatus is configured to convert first polarized light into second polarized light, where a polarized state of the second polarized light is different from a polarized state of the first polarized light, and the first polarized light includes the combined light. The beam shifter is configured to perform birefringence on the second polarized light, to obtain corresponding ordinary light or extraordinary light.

Optionally, the polarization apparatus includes two transparent electrodes and one liquid crystal molecular layer, and the liquid crystal molecular layer is disposed between the two transparent electrodes. When an electrical signal is applied to the transparent electrodes, liquid crystal molecules in the liquid crystal molecular layer rotate, to change the polarized state of the first polarized light and obtain the second polarized light.

Optionally, when the second polarized light has characteristics of the ordinary light for the beam shifter, the beam shifter emits ordinary light corresponding to the second polarized light; and/or when the second polarized light has characteristics of the extraordinary light for the beam shifter, the beam shifter emits extraordinary light corresponding to the second polarized light.

Optionally, a polarization selection device is disposed between the red light-emitting pixel array and the light-combining prism, and/or a polarization selection device is disposed between the blue light-emitting pixel array and the light-combining prism, and/or a polarization selection device is disposed between the green light-emitting pixel array and the light-combining prism.

Regardless of whether the red light emitted by the red light-emitting pixel array, the green light emitted by the green light-emitting pixel array, and the blue light emitted by the blue light-emitting pixel array are polarized light, the polarization selection devices can polarize the red light, the green light, and the blue light, respectively, to ensure that light incident on the light-combining prism is polarized light, and further implement that polarized combined light is incident on the at least one group of pixel expansion apparatuses.

Optionally, a polarization selection device is disposed between the light-combining prism and the at least one group of pixel expansion apparatuses.

Regardless of whether the red light emitted by the red light-emitting pixel array, the green light emitted by the green light-emitting pixel array, and the blue light emitted by the blue light-emitting pixel array are polarized light, the polarization selection device can polarize the combined light of the red light, the green light, and the blue light, to ensure that light incident on the at least one group of pixel expansion apparatuse s is polarized combined light.

In a possible implementation, an active light-emitting pixel array includes a self-emitting panel, or the active light-emitting pixel array includes a self-emitting panel and a quantum dot material, or the active light-emitting pixel array includes a self-emitting panel and a polarization selection device, or the active light-emitting pixel array includes a self-emitting panel, a quantum dot material, and a polarization selection device, or the active light-emitting pixel array includes a self-emitting panel and a quantum rod material. The self-emitting panel includes a micron light-emitting diode panel or a micron organic light-emitting diode panel. The active light-emitting pixel array is the red light-emitting pixel array, the green light-emitting pixel array, or the blue light-emitting pixel array.

In a possible implementation, an optical engine lens is further included. The optical engine lens is configured to receive the expanded combined light, magnify an image formed by the expanded combined light, and project a magnified image.

According to a third aspect, this application provides a full-color projection optical engine, including the projection display system according to any one of the first and second aspects.

According to a fourth aspect, this application provides a projection display method. The method is used in the projection display system that is according to any one of the first aspect. The method includes: making red light emitted by the red light-emitting pixel array incident on the at least one group of pixel expansion apparatuses; obtaining, by the at least one group of pixel expansion apparatuses, expanded red light based on the red light, where resolution of an image obtained based on the expanded red light is n times resolution of an image obtained based on the red light, and n > 1; making the expanded red light, blue light emitted by the blue light-emitting pixel array, and green light emitted by the green light-emitting pixel array incident on the light-combining prism; and combining, by the light-combining prism, the expanded red light, the blue light, and the green light, and emitting combined light along a same direction.

In a possible implementation, the obtaining, by the at least one group of pixel expansion apparatuses, expanded red light based on the red light includes: The at least one group of pixel expansion apparatuses performs different polarization on the red light at a plurality of moments to obtain red light that is in a plurality of polarized states. Optical paths of the red light that is in a plurality of polarized states are parallel but do not coincide. The expanded red light includes the red light that is in a plurality of polarized states.

According to a fifth aspect, this application provides a projection display method. The method is used in the projection display system that is according to any one of the second aspect. The method includes: making red light emitted by the red light-emitting pixel array, blue light emitted by the blue light-emitting pixel array, and green light emitted by the green light-emitting pixel array incident on the light-combining prism; combining, by the light-combining prism, the red light, the blue light, and the green light, and emitting combined light along a same direction; making the combined light emitted by the light-combining prism incident on the at least one group of pixel expansion apparatuses; and obtaining, by the at least one group of pixel expansion apparatuses, expanded combined light based on the combined light, where resolution of an image obtained based on the expanded combined light is n times resolution of an image obtained based on the combined light, and n > 1.

In a possible implementation, the obtaining, by the at least one group of pixel expansion apparatuses, expanded combined light based on the combined light includes: The at least one group of pixel expansion apparatuses performs different polarization on the combined light at a plurality of moments to obtain combined light that is in a plurality of polarized states. Optical paths of the combined light that is in a plurality of polarized states are parallel but do not coincide. The expanded combined light includes the combined light that is in a plurality of polarized states.

### BRIEF DESCRIPTION OF DRAWINGS

FIG. 1 is a diagram of a structure of a self-emitting projection display system in a conventional technology;
FIG. 2 is a diagram of an example structure of a projection display system 200 according to this application;
FIG. 3 is a diagram of an example structure of one group of pixel expansion apparatuses 300 according to this application;
FIG. 4 is an example schematic diagram of working principles of a beam shifter 302;
FIG. 5 is a diagram of example effect of one group of pixel expansion apparatuses 300;
FIG. 6 is a diagram of an example structure of two groups of pixel expansion apparatuses 600 according to this application;
FIG. 7 is a diagram of example effect of two groups of pixel expansion apparatuses 600;
FIG. 8 is a diagram of an example structure of a light-combining prism 800 according to this application;
FIG. 9 is a diagram of an example structure of a projection display system 900 according to this application;
FIG. 10 is a diagram of an example structure of a projection display system 1000 according to this application;
FIG. 11 is a diagram of an example structure of a projection display system 1100 according to this application;
FIG. 12 is a diagram of an example structure of a projection display system 1200 according to this application;
FIG. 13 is a diagram of an example structure of a full-color projection optical engine 1300 according to this application;
FIG. 14 is an example flowchart of a process 1400 of a projection display method according to this application; and
FIG. 15 is an example flowchart of a process 1500 of a projection display method according to this application.

### DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are some rather than all of embodiments of this application. All other embodiments obtained by persons of ordinary skill in the art based on embodiments of this application without creative efforts fall within the protection scope of this application.

In the specification, embodiments, claims, and accompanying drawings of this application, terms "first", "second", and the like are merely intended for distinguishing and description, and shall not be understood as indicating or implying relative importance, or indicating or implying a sequence. In addition, terms "include", "have", and any variant thereof are intended to cover non-exclusive inclusions. For example, a method, system, product, or device that includes a series of steps or units is not necessarily limited to those clearly listed steps or units, but may include other steps or units that are not clearly listed or inherent to such a process, method, product, or device.

It should be understood that in this application, "at least one (one item)" means one or more and "a plurality of" means two or more. "and/or" is used to describe an association between associated objects, and indicates that three relationships may exist. For example, "A and/or B" may indicate the following three cases: Only A exists, only B exists, and both A and B exist, where A and B may be singular or plural. The character "/" usually indicates that associated objects are in an "or" relationship. "at least one of the following" or a similar expression thereof indicates any combination of these items, including a single item (piece) or any combination of a plurality of items (pieces). For example, "at least one of a, b, or c" may indicate a, b, c, "a and b", "a and c", "b and c", or "a, b, and c", where a, b, and c may be singular or plural.

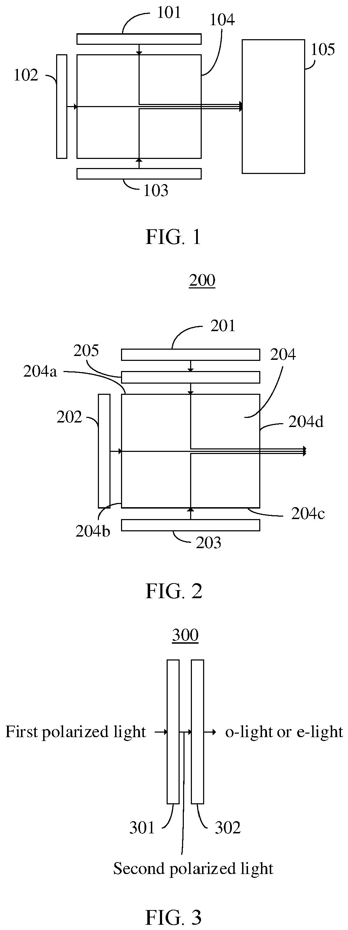

FIG. 1 is a diagram of a structure of a self-emitting projection display system in a conventional technology. As shown in FIG. 1, the self-emitting projection display system includes a plurality of light-emitting units 101, 102, and 103 and an optical light-combining unit 104. The plurality of light-emitting units 101, 102, and 103 are configured to emit light in different colors. The optical light-combining unit 104 is disposed in optical paths of light beams emitted by the light-emitting units 101, 102, and 103, to combine the light emitted by the plurality of light-emitting units 101, 102, and 103, and emit combined light to the outside along a same direction. In addition, an optical imaging unit 105 is further disposed in a direction in which the optical light-combining unit 104 emits light beams, and configured to: receive the light beams emitted from the optical light-combining unit 104, magnify an image formed by the light beams, and project a magnified image onto an interface.

As shown in FIG. 1, the plurality of light-emitting units 101, 102, and 103 are disposed around the optical light-combining unit 104. The light-emitting units 101, 102, and 103 emit light beams toward the optical light-combining unit 104, so that the optical light-combining unit 104 combines the light beams emitted by the light-emitting units 101, 102, and 103 to a same direction and emits the combined light to the outside. The plurality of light-emitting units 101, 102, and 103 may use three monochrome active light-emitting panels of red, green, and blue (RGB). Due to a characteristic that the RGB active light-emitting panels can emit light actively, the RGB active light-emitting panels may be placed directly against the optical light-combining unit 104, to reduce a volume of the self-emitting projection display system.

To ensure that the self-emitting projection display system is small in volume, it is desired that sizes of the RGB active light-emitting panels are minimized. On the premise of ensuring that the self-emitting projection display system is small in volume, if the sizes of the RGB active light-emitting panels remain unchanged, pixel dimensions of the RGB active light-emitting panels decrease as resolution increases. Accordingly, light-emitting efficiency of the RGB active light-emitting panels decreases rapidly as the pixel dimensions decrease. In particular, the light-emitting efficiency of the red active light-emitting panel is even lower than the light-emitting efficiency of the blue active light-emitting panel and the light-emitting efficiency of the green active light-emitting panel. Light-emitting efficiency may also be referred to as external quantum efficiency (external quantum efficiency, EQE) or electro-optical conversion efficiency.

To resolve the foregoing technical problem, this application provides a projection display system, which is described below using embodiments.

FIG. 2 is a diagram of an example structure of a projection display system 200 according to this application. As shown in FIG. 2, the projection display system 200 includes a red light-emitting pixel array 201, a green light-emitting pixel array 202, a blue light-emitting pixel array 203, and a light-combining prism 204. The light-combining prism 204 is disposed in optical paths of red light emitted by the red light-emitting pixel array 201, green light emitted by the green light-emitting pixel array 202, and blue light emitted by the blue light-emitting pixel array 203. Pixel dimensions of the blue light-emitting pixel array 203 and pixel dimensions of the green light-emitting pixel array 202 are both smaller than pixel dimensions of the red light-emitting pixel array 201. At least one group of pixel expansion apparatuses 205 is disposed between the red light-emitting pixel array 201 and the light-combining prism 204. The at least one group of pixel expansion apparatuses 205 is configured to obtain expanded red light based on the red light, where resolution of an image obtained based on the expanded red light is n times resolution of an image obtained based on the red light, and n > 1. The light-combining prism 204 is configured to: combine the expanded red light, the blue light, and the green light, and emit combined light along a same direction.

In this embodiment of this application, the red light-emitting pixel array 201, the green light-emitting pixel array 202, and the blue light-emitting pixel array 203 are all capable of emitting light by itself. The red light-emitting pixel array 201 emits red light, where the red light may be polarized light. The green light-emitting pixel array 202 emits green light, and the blue light-emitting pixel array 203 emits blue light.

The red light-emitting pixel array 201 may include a self-emitting panel and a polarization selection device. By using the polarization selection device, red polarized light is obtained. Alternatively, the red light-emitting pixel array 201 may include a self-emitting panel, a quantum dot material, and a polarization selection device. With the quantum dot material, a red panel may be displayed according to principles of photoluminescence, and light emitted in this case is red unpolarized light. Then, red polarized light is obtained by using the polarization selection device. Alternatively, the red light-emitting pixel array 201 may include a self-emitting panel and a quantum rod material. With the quantum rod material, red polarized light may be directly obtained according to principles of photoluminescence. Optionally, the red light-emitting pixel array 201 may use a red-light self-emitting panel or a short-wavelength (for example, blue light or ultraviolet light) self-emitting panel.

Light is a kind of electromagnetic wave, and the electromagnetic wave is a transverse wave. A plane formed by a direction of vibration and a direction in which a light wave travels is called a plane of vibration. Light whose plane of vibration is confined only to a fixed direction is called plane polarized light (polarized light) or linearly polarized light. Usually, planes of vibration of light emitted by a light source are not confined only to a fixed direction but are evenly distributed in all directions. Such light is called natural light. Directions of vibration of polarized light are asymmetric relative to a direction of propagation.

Polarization of light can be observed using experimental apparatuses. P1 and P2 are two identical polarizers. In a polarizer, there is a characteristic direction, which is called a direction of polarization. A polarizer allows only light that vibrates in a direction parallel to a direction of polarization to pass through, and absorbs light that vibrates in a direction perpendicular to the direction of polarization. Natural light (for example, lamplight or sunlight) is incident on the polarizer P1. Then, transmitted light passing through the polarizer P1 is incident on the polarizer P2. Although the transmitted light passing through the polarizer P1 becomes polarized light, the polarized light cannot be perceived, because human eyes cannot distinguish polarized light. When an orientation of the polarizer P1 is fixed and the polarizer P2 is rotated slowly, it can be learned that intensity of transmitted light passing through the polarizer P2 changes cyclically as P2 is rotated. In addition, the intensity of the light gradually decreases from the maximum to the minimum each time P2 is rotated by 90 degrees, and gradually increases from being close to 0 to the maximum when P2 is rotated again. Therefore, it can be learned that the transmitted light passing through the polarizer P1 is different from the original natural light in nature, and directions of vibration of the transmitted light passing through the polarizer P1 are not symmetric relative to a direction of propagation. After being polarized by the polarizer, the natural light is changed into light that vibrates in a fixed direction. The light is also referred to as light that is in a polarized state (that is, polarized light).

In this embodiment of this application, the polarization selection device may be the polarizer, and polarize the red light emitted by the self-emitting panel in the red light-emitting pixel array 201, to obtain the red polarized light. Pixel expansion described below can be achieved only on the basis of the red polarized light.

The green light-emitting pixel array 202 may include a self-emitting panel and directly emit green light. Alternatively, the green light-emitting pixel array 202 may include a self-emitting panel and a quantum dot material. With the quantum dot material, a green panel may be displayed based on principles of photoluminescence, and green light is emitted. Optionally, the green light-emitting pixel array 202 may use a short-wavelength (for example, blue light or ultraviolet light) self-emitting panel.

The blue light-emitting pixel array 203 may include a self-emitting panel and directly emit blue light. Alternatively, the blue light-emitting pixel array 203 may include a self-emitting panel and a quantum dot material. With the quantum dot material, a blue panel may be displayed based on principles of photoluminescence, and blue light is emitted. Optionally, the blue light-emitting pixel array 203 may use a short-wavelength (for example, blue light) self-emitting panel.

The self-emitting panel may be a micron light-emitting diode (micro light emitting diode, Micro LED) panel or a micron organic light-emitting diode (micro organic light emitting diode, Micro OLED) panel. It should be noted that the red light-emitting pixel array 201, the green light-emitting pixel array 202, and the blue light-emitting pixel array 203 in this embodiment of this application are all capable of emitting light by itself. Therefore, the self-emitting panels included in the three pixel arrays may alternatively be other light-emitting panels other than micro LED panels and micro OLED panels. This is not specifically limited.

FIG. 3 is a diagram of an example structure of one group of pixel expansion apparatuses 300 according to this application. As shown in FIG. 3, the group of pixel expansion apparatuses 300 includes a polarization apparatus 301 and a beam shifter 302. The polarization apparatus 301 is configured to convert first polarized light into second polarized light, where a polarized state of the second polarized light is different from a polarized state of the first polarized light. The beam shifter 302 is configured to perform birefringence on the second polarized light, to obtain corresponding ordinary light or extraordinary light.

When being driven by an electrical signal, the polarization apparatus 301 may convert the first polarized light into light that is in another polarized state, that is, the second polarized light. In a possible implementation, the polarization apparatus 301 is of a three-layer structure: a transparent electrode + a liquid crystal molecular layer + a transparent electrode. When an appropriate electrical signal is applied to the transparent electrodes, liquid crystal molecules in the liquid crystal molecular layer rotate, to convert a polarized state of incident polarized light.

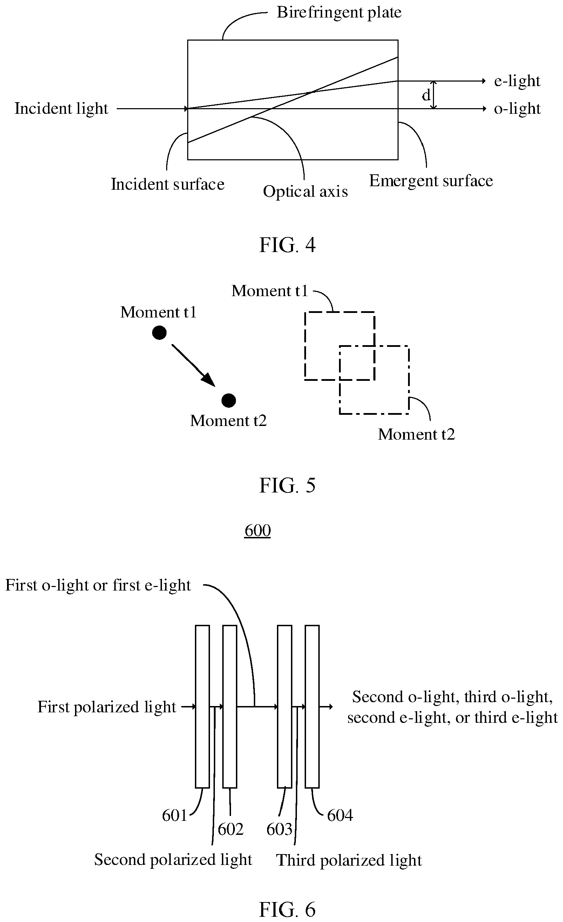

The beam shifter 302 may be a transparent birefringent plate of specific thickness. FIG. 4 is an example schematic diagram of working principles of the beam shifter 302. As shown in FIG. 4, when incident light (the second polarized light) is incident on the birefringent plate, birefringence occurs, and the incident light is split into two polarized light rays with vibration directions perpendicular to one another. One of the light rays obeys the laws of normal refraction, and is referred to as ordinary light (o-light). The other light ray does not obey the laws of normal refraction, and is referred to as extraordinary light (e-light). The o-light passes through the birefringent plate along an original propagation direction and emerges. The e-light responds to birefringence, is refracted once on each of an incident surface and an emergent surface of the birefringent plate, and then emerges. A direction of the emerging e-light is parallel to a direction of the emerging o-light, and there is a displacement of d between the emerging e-light and the emerging o-light. It should be understood that if the incident light has characteristics of both the o-light and the e-light, birefringence may occur in the birefringent plate, and both the o-light and the e-light emerge; if the incident light has characteristics of only the o-light, the o-light emerges after birefringence occurs in the birefringent plate; and if the incident light has characteristics of only the e-light, the e-light emerges after birefringence occurs in the birefringent plate.

In this embodiment of this application, the first polarized light is the red light emitted by the red light-emitting pixel array 201. Working principles of the group of pixel expansion apparatuses 300 are as follows.
(1) At a moment t1, the polarization apparatus 301 converts the red light into red light that is in a first polarized state. The red light in the first polarized state has characteristics of o-light for the beam shifter 302. The red light in the first polarized state is incident on the beam shifter 302, obeys the laws of refraction, and passes through the beam shifter 302 along an original propagation direction. Then, the red light in the first polarized state (o-light) emerges.
(2) At a moment t2, the polarization apparatus 301 converts the red light into red light that is in a second polarized state. The red light in the second polarized state has characteristics of e-light for the beam shifter 302. The red light in the second polarized state is incident on the beam shifter 302, does not obey the laws of refraction, and is refracted once on each of an incident surface and an emergent surface of the beam shifter 302. Then, the red light in the second polarized state (e-light) emerges.

After (1) and (2) are repeated a plurality of times, two stable polarized red light beams can be obtained. For example, FIG. 5 is a diagram of example effect of the group of pixel expansion apparatuses 300. As shown in FIG. 5, after a pixel in the red light is processed by the group of pixel expansion apparatuses 300, a location at which the pixel is when being emitted at the moment t1 and a location at which the pixel is when being emitted at the moment t2 change. Accordingly, for an entire beam of the red light, the red light in the first polarized state (o-light) obtained at the moment t1 and the red light in the second polarized state (e-light) obtained at the moment t2 are parallel but do not coincide. It is equivalent to that from the moment t1 to the moment t2, a phenomenon can be obtained that the red light in the first polarized state and the red light in the second polarized state are combined through superimposition. In this way, resolution of an image formed by expanded red light is twice resolution of an image formed by the red light, implementing pixel expansion.

FIG. 6 is a diagram of an example structure of two groups of pixel expansion apparatuses 600 according to this application. As shown in FIG. 6, the two groups of pixel expansion apparatuses 600 include a polarization apparatus 601 and a beam shifter 602, and a polarization apparatus 603 and a beam shifter 604. For functions of the polarization apparatus 601 and the polarization apparatus 603 and functions of the beam shifter 602 and the beam shifter 604, refer to the embodiment shown in FIG. 3. Details are not described herein again.

When being driven by an electrical signal, the polarization apparatus 601 may convert first polarized light into light that is in another polarized state, that is, second polarized light.

The second polarized light undergoes birefringence in the beam shifter 602, and o-light or e-light emerges.

When being driven by an electrical signal, the polarization apparatus 603 may convert the o-light or e-light emitted by the beam shifter 602 into light that is in another polarized state, that is, third polarized light.

The third polarized light undergoes birefringence in the beam shifter 604, and o-light or e-light emerges.

In this embodiment of this application, the first polarized light is the red light emitted by the red light-emitting pixel array 201. Working principles of the two groups of pixel expansion apparatuses 600 are as follows.
(1) At a moment t1, the polarization apparatus 601 converts the red light into red light that is in a first polarized state. The red light in the first polarized state has characteristics of o-light for the beam shifter 602. The red light in the first polarized state is incident on the beam shifter 602, obeys the laws of refraction, and passes through the beam shifter 602 along an original propagation direction. Then, the red light in the first polarized state (o-light) emerges.

The polarization apparatus 603 converts the red light that is in the first polarized state into red light that is in a second polarized state. The red light in the second polarized state has characteristics of o-light for the beam shifter 604. The red light in the second polarized state is incident on the beam shifter 604, obeys the laws of refraction, and passes through the beam shifter 604 along the original propagation direction. Then, the red light in the second polarized state (o-light) emerges.

(2) At a moment t2, the polarization apparatus 601 converts the red light into red light that is in a third polarized state. The red light in the third polarized state has characteristics of e-light for the beam shifter 602. The red light in the third polarized state is incident on the beam shifter 602, does not obey the laws of refraction, and is refracted once on each of an incident surface and an emergent surface of the beam shifter 602. Then, the red light in the third polarized state (e-light) emerges.

The polarization apparatus 603 converts the red light that is in the third polarized state into red light that is in a fourth polarized state. The red light in the fourth polarized state has characteristics of o-light for the beam shifter 604. The red light in the fourth polarized state is incident on the beam shifter 604, obeys the laws of refraction, and passes through the beam shifter 604 along the original propagation direction. Then, the red light in the fourth polarized state (o-light) emerges.

(3) At a moment t3, the polarization apparatus 601 converts the red light into red light that is in a fifth polarized state. The red light in the fifth polarized state has characteristics of e-light for the beam shifter 602. The red light in the fifth polarized state is incident on the beam shifter 602, does not obey the laws of refraction, and is refracted once on each of the incident surface and the emergent surface of the beam shifter 602. Then, the red light in the fifth polarized state (e-light) emerges.

The polarization apparatus 603 converts the red light that is in the fifth polarized state into red light that is in a sixth polarized state. The red light in the sixth polarized state has characteristics of e-light for the beam shifter 604. The red light in the sixth polarized state is incident on the beam shifter 604, does not obey the laws of refraction, and is refracted once on each of an incident surface and an emergent surface of the beam shifter 604. Then, the red light in the sixth polarized state (e-light) emerges.

(4) At a moment t4, the polarization apparatus 601 converts the red light into red light that is in a seventh polarized state. The red light in the seventh polarized state has characteristics of o-light for the beam shifter 602. The red light in the seventh polarized state is incident on the beam shifter 602, obeys the laws of refraction, and passes through the beam shifter 602 along the original propagation direction. Then, the red light in the seventh polarized state (o-light) emerges.

The polarization apparatus 603 converts the red light that is in the seventh polarized state into red light that is in an eighth polarized state. The red light in the eighth polarized state has characteristics of e-light for the beam shifter 604. The red light in the eighth polarized state is incident on the beam shifter 604, does not obey the laws of refraction, and is refracted once on each of the incident surface and the emergent surface of the beam shifter 604. Then, the red light in the eighth polarized state (e-light) emerges.

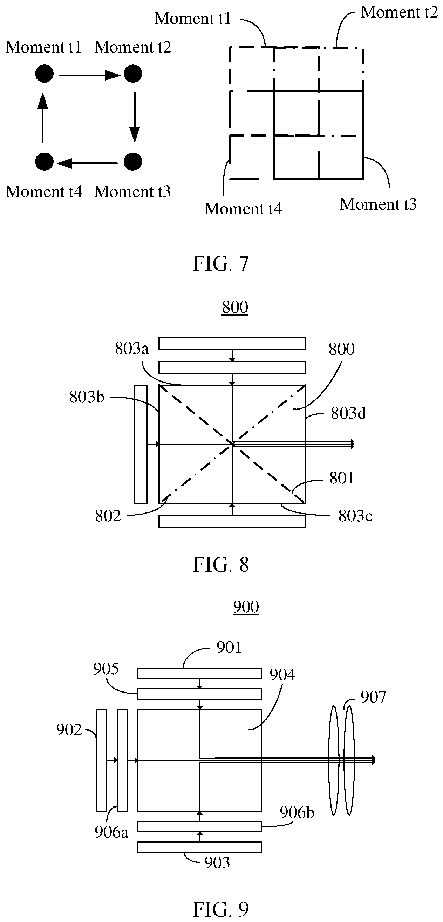

After (1) to (4) are repeated a plurality of times, four stable polarized red light beams can be obtained. For example, FIG. 7 is a diagram of example effect of the two groups of pixel expansion apparatuses 600. As shown in FIG. 7, after a pixel in red light is processed by the two groups of pixel expansion apparatuses 600, a location at which the pixel is when being emitted at the moment t1, a location at which the pixel is when being emitted at the moment t2, a location at which the pixel is when being emitted at the moment t3, and a location at which the pixel is when being emitted at the moment t4 all change. Accordingly, for an entire beam of the red light, the red light in the second polarized state (o-light) is obtained at the moment t1, the red light in the fourth polarized state (o-light) is obtained at the moment t2, the red light in the sixth polarized state (e-light) is obtained at the moment t3, and the red light in the eighth polarized state (e-light) is obtained at the moment t4. It is equivalent to that from the moment t1 to the moment t4, a phenomenon can be obtained that the red light in the second polarized state, the red light in the fourth polarized state, the red light in the sixth polarized state, and the red light in the eighth polarized state are combined through superimposition. In this way, resolution of an image formed by expanded red light is quadruple resolution of an image formed by the red light, implementing pixel expansion.

It should be noted that in addition to the structure shown in FIG. 3 or FIG. 6, the at least one group of pixel expansion apparatuses may be of other structures, for example, three groups of pixel expansion apparatuses and four groups of pixel expansion apparatuses. Each group of pixel expansion apparatuses includes a polarization apparatus and a beam shifter. For the polarization apparatus in the at least one group of pixel expansion apparatuses, a manner in which incident light is converted into a polarized state may be set based on a requirement, so that n polarized red light beams are obtained, where n > 1. This is not specifically limited in this embodiment of this application.

It can be learned based on the principles of the pixel expansion apparatuses that after the red light emitted by the red light-emitting pixel array 201 is processed by the at least one group of pixel expansion apparatuses 205, the expanded red light is obtained, and the resolution of the image obtained based on the expanded red light (also referred to as an image formed by the expanded red light) is n times the resolution of the image obtained based on the red light emitted by the red light-emitting pixel array 201 (also referred to as an image formed by the red light), where n > 1. For example, if the red light emitted by the red light-emitting pixel array 201 is incident on the group of pixel expansion apparatuses 300 shown in FIG. 3, resolution of an image formed by obtained expanded red light is twice resolution of an image formed by the incident red light; or if the red light emitted by the red light-emitting pixel array 201 is incident on the two groups of pixel expansion apparatuses 600 shown in FIG. 6, resolution of an image formed by obtained expanded red light is quadruple resolution of an image formed by the incident red light.

It should be noted that FIG. 3 to FIG. 7 illustrate disposing and principles of two types of pixel expansion apparatuses. In an embodiment of this application, disposing at least one group of pixel expansion apparatuses between a red light-emitting pixel array and a light-combining prism is to increase resolution of an image obtained based on red light by a factor of n. Physical resolution of the red light emitted by the red light-emitting pixel array is related to a panel size and pixel dimensions of the red light-emitting pixel array. When a physical device remains unchanged, the physical resolution of the red light does not change. However, the resolution of the image formed by the red light can be increased by using the at least one group of pixel expansion apparatuses, equivalent to that display effect of a plurality of parallel red light beams is achieved by using one red light beam. As for n-fold expansion achieved by the at least one group of pixel expansion apparatuses, n may be implemented by setting a drive electrical signal, a quantity of groups of pixel expansion apparatuses, a polarized state conversion parameter, a polarized state conversion cycle, and the like. None of the foregoing data is specifically limited in this embodiment of this application.

In this embodiment of this application, pixel dimensions of a blue light-emitting pixel array and pixel dimensions of a green light-emitting pixel array are both smaller than the pixel dimensions of the red light-emitting pixel array.

For example, it is assumed that drive current density is 70 A/cm². When a light-emitting part of each pixel in micro LED panels in the RGB light-emitting pixel arrays is 6 µm in diameter, light-emitting efficiency of the red micro LED panel is 8%, light-emitting efficiency of the green micro LED panel is 13%, and light-emitting efficiency of the blue micro LED panel is 18%. When the light-emitting part of each pixel in the micro LED panels is 1.7 µm in diameter, the light-emitting efficiency of the red micro LED panel is 2%, the light-emitting efficiency of the green micro LED panel is 7%, and the light-emitting efficiency of the blue micro LED panel is 9%. Therefore, it can be learned that as pixel dimensions decrease, the light-emitting efficiency or electro-optical conversion efficiency of the micro LED panels decreases significantly.

When pixel dimensions of the micro LED panels are all 4 µm × 4 µm, the light-emitting efficiency of the red micro LED panel is only 1/4 of the light-emitting efficiency of the blue micro LED panel or the light-emitting efficiency of the green micro LED panel. When the pixel dimensions further decrease, the efficiency ratio is smaller than 1/4. Therefore, it can be learned that of micro LED panels with pixels of small dimensions, light-emitting efficiency of a red micro LED panel becomes a greatest weakness of a self-emitting projection display system.

Based on this, the pixel dimensions of the blue light-emitting pixel array and the pixel dimensions of the green light-emitting pixel array may be set to be both smaller than the pixel dimensions of the red light-emitting pixel array.

For example, it is assumed that the drive current density is 70 A/cm², and resolution of the micro LED panels in the RGB light-emitting pixel arrays is 640 × 480. When the pixel dimensions are 4 µm × 4 µm, a corresponding diameter of the light-emitting part of each pixel is about 1.7 µm. With this light-emitting area, the light-emitting efficiency of the red micro LED panel is 2%, the light-emitting efficiency of the green micro LED panel is 7%, and the light-emitting efficiency of the blue micro LED panel is 9%. When the pixel dimensions are 8 µm × 8 µm, a corresponding diameter of the light-emitting part of each pixel is about 6 µm. With this light-emitting area, the light-emitting efficiency of the red micro LED panel is 8%, the light-emitting efficiency of the green micro LED panel is 13%, and the light-emitting efficiency of the blue micro LED panel is 18%. Therefore, it can be learned that when a side size of a pixel is doubled, the light-emitting efficiency of the RGB micro LED panels can be quadrupled, doubled, and doubled, respectively, and an increase in the light-emitting efficiency of the red micro LED panel is particularly significant.

For example, in a case in which the red light-emitting pixel array includes a self-emitting panel and a polarization selection device, when pixel dimensions of the self-emitting panel are increased from 4 µm × 4 µm to 8 µm × 8 µm, light-emitting efficiency of the self-emitting panel is quadrupled. By using the polarization selection device, red polarized light is obtained (utilization of 50%). If a diffractive optical waveguide is used, utilization of polarized light is higher than utilization of unpolarized light. For example, if a volume holographic diffractive optical waveguide is used, utilization of polarized light is double utilization of unpolarized light. Therefore, on the whole, overall light-emitting efficiency of the red self-emitting panel is increased by a factor of two to four.

For another example, in a case in which the red light-emitting pixel array includes a self-emitting panel, a quantum dot material, and a polarization selection device, because light-emitting efficiency of a blue-light self-emitting panel with pixel dimensions of 8 µm × 8 µm is 18% and photoluminescence efficiency of the quantum dot material is about 50%, efficiency of emitting red light is 9%, quadruple light-emitting efficiency of a red-light self-emitting panel with pixel dimensions of 4 µm × 4 µm. Then, with efficiency of the polarization selection device and a following diffractive optical waveguide considered, on the whole, overall light-emitting efficiency of the red self-emitting panel is increased by a factor of two to four.

For another example, in a case in which the red light-emitting pixel array includes a self-emitting panel and a quantum rod material, because light-emitting efficiency of a blue-light self-emitting panel with pixel dimensions of 8 µm × 8 µm is 18% and photoluminescence efficiency of the quantum rod material is about 50%, efficiency of emitting red light is 9%, quadruple light-emitting efficiency of a red-light self-emitting panel with pixel dimensions of 4 µm × 4 µm. Because the quantum rod material emits polarized red light, a loss caused by a polarization selection device can be ignored. Then, with an efficiency increase provided by a following diffractive optical waveguide considered, on the whole, overall light-emitting efficiency of the red self-emitting panel is increased by a factor of four to eight.

The light-combining prism 204 has three surfaces 204a, 204b, and 204c, and 204d. The surface 204a corresponds to the red light-emitting pixel array 201, the surface 204b corresponds to the green light-emitting pixel array 202, and the surface 204c corresponds to the blue light-emitting pixel array 203. After red light emitted by the red light-emitting pixel array 201 is processed by the at least one group of pixel expansion apparatuses 205, expanded red light is obtained. The expanded red light passes through the surface 204a and is incident on the light-combining prism 204. Green light emitted by the green light-emitting pixel array 202 passes through the surface 204b and is incident on the light-combining prism 204. Blue light emitted by the blue light-emitting pixel array 203 passes through the surface 204c and is incident on the light-combining prism 204. The light-combining prism 204 combines the expanded red light, the blue light, and the green light. Combined light passes through the surface 204d and emerges from the light-combining prism 204.

In a possible implementation, FIG. 8 is a diagram of an example structure of a light-combining prism 800 according to this application. As shown in FIG. 8, a red dichroic reflective coating 801 and a blue dichroic reflective coating 802 are provided along bidirectional diagonals in the middle of the light-combining prism 800, respectively. Expanded red light is incident after passing through a surface 803a, is reflected by the red dichroic reflective coating 801, and emerges from a surface 803d. Green light is incident after passing through a surface 803b, directly passes through the light-combining prism 800, and emerges from the surface 803d. Blue light is incident after passing through a surface 803c, is reflected by the blue dichroic reflective coating 802, and emerges from the surface 803d. It can be learned that the combined light emitted by the light-combining prism 204 includes the expanded red light, the blue light, and the green light.

It should be noted that in this embodiment of this application, locations of the red light-emitting pixel array 201, the green light-emitting pixel array 202, and the blue light-emitting pixel array 203 can be exchanged. For example, the locations of the red light-emitting pixel array 201 and the blue light-emitting pixel array 203 are exchanged, or the locations of the red light-emitting pixel array 201 and the green light-emitting pixel array 202 are exchanged.

In this embodiment of this application, with at least one group of pixel expansion apparatuses disposed between the red light-emitting pixel array and the light-combining prism, the resolution of the image obtained based on the red light can be increased by a factor of n. Therefore, when it is ensured that an overall size of RGB self-emitting panels remains unchanged, pixel dimensions of the red self-emitting panel may be increased, improving light-emitting efficiency of the red self-emitting panel. Then, through processing performed by the at least one group of pixel expansion apparatuses, the resolution of the image obtained based on the red light can be increased. In this way, even if the resolution of the image formed by the red light decreases due to an increase in the pixel dimensions, the resolution of the image formed by the red light is increased back through processing performed by the at least one group of pixel expansion apparatuses. Therefore, on the premise of ensuring that the projection display system is small in volume, this not only ensures the resolution of the image formed by the red light, but also improves the light-emitting efficiency of the red self-emitting panel, and even light-emitting efficiency of the entire projection display system.

On the basis of the embodiment shown in FIG. 2, FIG. 9 is a diagram of an example structure of a projection display system 900 according to this application. As shown in FIG. 9, in the projection display system 900, in addition to a red light-emitting pixel array 901 and at least one group of pixel expansion apparatuses 905, an optical path length compensation device 906a is disposed between a green light-emitting pixel array 902 and a light-combining prism 904, and/or an optical path length compensation device 906b is disposed between a blue light-emitting pixel array 903 and the light-combining prism 904. In addition, an optical engine lens 907 is disposed in an optical path of combined light emitted by the light-combining prism 904.

The optical engine lens 907 is configured to receive the combined light emitted from the light-combining prism 904, magnify an image formed by the combined light, and project a magnified image.

The optical path length compensation device is configured to adjust a length of an optical path of incident light (green light or blue light) and change the length of the optical path of the incident light. During design of a lens, to ensure optimum imaging, distances between RGB self-emitting panels and the lens need to be equal. However, because the at least one group of pixel expansion apparatuses 905 is disposed between the red light-emitting pixel array 901 and the light-combining prism 904, a length of an optical path of red light may increase. Therefore, the length of the optical path of the blue light and/or the length of the optical path of the green light also need/needs to be adjusted accordingly. To be specific, the optical path length compensation device 906a is disposed between the green light-emitting pixel array 902 and the light-combining prism 904, and/or the optical path length compensation device 906b is disposed between the blue light-emitting pixel array 903 and the light-combining prism 904. Parameters and the like of the optical path length compensation devices are set based on an actual requirement. This is not specifically limited.

Optionally, in this embodiment of this application, the length of the optical path of the green light and/or the length of the optical path of the blue light may also be adjusted by adjusting a distance between the green light-emitting pixel array 902 and the light-combining prism 904 and/or a distance between the blue light-emitting pixel array 903 and the light-combining prism 904.

In a possible implementation, in this embodiment of this application, a size of the surface 204a of the light-combining prism 204 may be set to be greater than or equal to a size of the red light-emitting pixel array 201, a size of the surface 204b of the light-combining prism 204 may be set to be greater than or equal to a size of the green light-emitting pixel array 202, and a size of the surface 204c of the light-combining prism 204 may be set to be greater than or equal to a size of the blue light-emitting pixel array 203. In addition, a size of the optical engine lens is set to be greater than or equal to a size of the surface 204d of the light-combining prism 204. In this way, it is ensured that the red light, the green light, and the blue light can all be transmitted to the optical engine lens, improving light conversion efficiency.

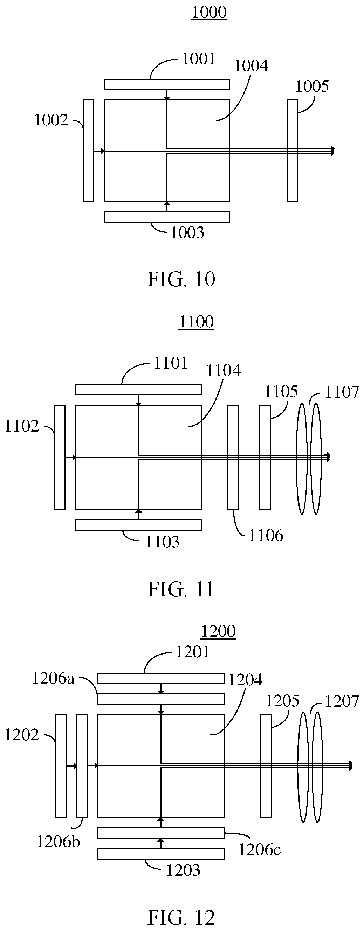

FIG. 10 is a diagram of an example structure of a projection display system 1000 according to this application. As shown in FIG. 10, the projection display system 1000 includes a red light-emitting pixel array 1001, a green light-emitting pixel array 1002, a blue light-emitting pixel array 1003, and a light-combining prism 1004. The light-combining prism 1004 is disposed in optical paths of red light emitted by the red light-emitting pixel array 1001, green light emitted by the green light-emitting pixel array 1002, and blue light emitted by the blue light-emitting pixel array 1003. The light-combining prism 1004 is configured to: combine the red light, the blue light, and the green light, and emit combined light along a same direction. At least one group of pixel expansion apparatuses 1005 is disposed in an optical path of the combined light emitted by the light-combining prism 1004. The at least one group of pixel expansion apparatuses 1005 is configured to obtain expanded combined light based on the combined light, where resolution of an image obtained based on the expanded combined light (also referred to as an image formed by the expanded combined light) is n times resolution of an image obtained based on the combined light (also referred to as an image formed by the combined light), and n > 1. The combined light includes the red light, the blue light, and the green light.

This embodiment of this application differs from the embodiment shown in FIG. 2 in the following: The at least one group of pixel expansion apparatuses is moved from between the red light-emitting pixel array and the light-combining prism to in the optical path of the combined light emitted by the light-combining prism. In this way, the at least one group of pixel expansion apparatuses can perform pixel expansion on the red light, the green light, and the blue light, so that the resolution of the image obtained based on the red light, the green light, and the blue light is increased by a factor of n.

In this embodiment of this application, an active light-emitting pixel array includes a self-emitting panel, or the active light-emitting pixel array includes a self-emitting panel and a quantum dot material, or the active light-emitting pixel array includes a self-emitting panel and a polarization selection device, or the active light-emitting pixel array includes a self-emitting panel, a quantum dot material, and a polarization selection device, or the active light-emitting pixel array includes a self-emitting panel and a quantum rod material. The self-emitting panel includes a micro LED panel or a micro OLED panel. The active light-emitting pixel array may be the red light-emitting pixel array, the green light-emitting pixel array, or the blue light-emitting pixel array.

In this embodiment of this application, with the at least one group of pixel expansion apparatuses disposed in the optical path of the combined light emitted by the light-combining prism, the resolution of the image obtained based on the combined light can be increased by a factor of n. In this way, pixel dimensions of a self-emitting panel can be increased with the resolution of the image formed by the combined light not reduced, resolving a problem that small pixel dimensions cannot be implemented due to process constraints, and reducing difficulty of a process. In addition, on the premise of not changing pixel dimensions, the resolution of the image formed by the combined light can be increased.

On the basis of the embodiment shown in FIG. 10, FIG. 11 is a diagram of an example structure of a projection display system 1100 according to this application. As shown in FIG. 11, a polarization selection device 1106 is disposed between a light-combining prism 1104 and at least one group of pixel expansion apparatuses 1105. The polarization selection device 1106 is configured to convert a polarized state of combined light emitted by the light-combining prism 1104, to obtain polarized combined light. In this way, regardless of whether red light emitted by a red light-emitting pixel array 1101, green light emitted by a green light-emitting pixel array 1102, and blue light emitted by a blue light-emitting pixel array 1103 are polarized light, the polarization selection device 1106 can polarize the combined light of the red light, the green light, and the blue light, to ensure that light incident on the at least one group of pixel expansion apparatuses 1105 is polarized combined light.

In addition, an optical engine lens 1107 is disposed in an optical path of expanded combined light emitted by the at least one group of pixel expansion apparatuses 1105. The optical engine lens 1107 is configured to receive the expanded combined light, magnify an image formed by the expanded combined light, and project a magnified image.

On the basis of the embodiment shown in FIG. 10, FIG. 12 is a diagram of an example structure of a projection display system 1200 according to this application. As shown in FIG. 12, a polarization selection device 1206a is disposed between a red light-emitting pixel array 1201 and a light-combining prism 1204, and/or a polarization selection device 1206b is disposed between a green light-emitting pixel array 1202 and the light-combining prism 1204, and/or a polarization selection device 1206c is disposed between a blue light-emitting pixel array 1203 and the light-combining prism 1204. The polarization selection device is configured to convert a polarized state of incident light (red light, green light, or blue light), to obtain polarized emerging light. In this way, regardless of whether the red light emitted by the red light-emitting pixel array 1201, the green light emitted by the green light-emitting pixel array 1202, and the blue light emitted by the blue light-emitting pixel array 1203 are polarized light, the polarization selection devices can polarize the red light, the green light, and the blue light, respectively, to ensure that light incident on the light-combining prism 1204 is polarized light, and further implement that polarized combined light is incident on at least one group of pixel expansion apparatuses 1205.

In addition, an optical engine lens 1207 is disposed in an optical path of expanded combined light emitted by the at least one group of pixel expansion apparatuses 1205. The optical engine lens 1207 is configured to receive the expanded combined light, magnify an image formed by the expanded combined light, and project a magnified image.

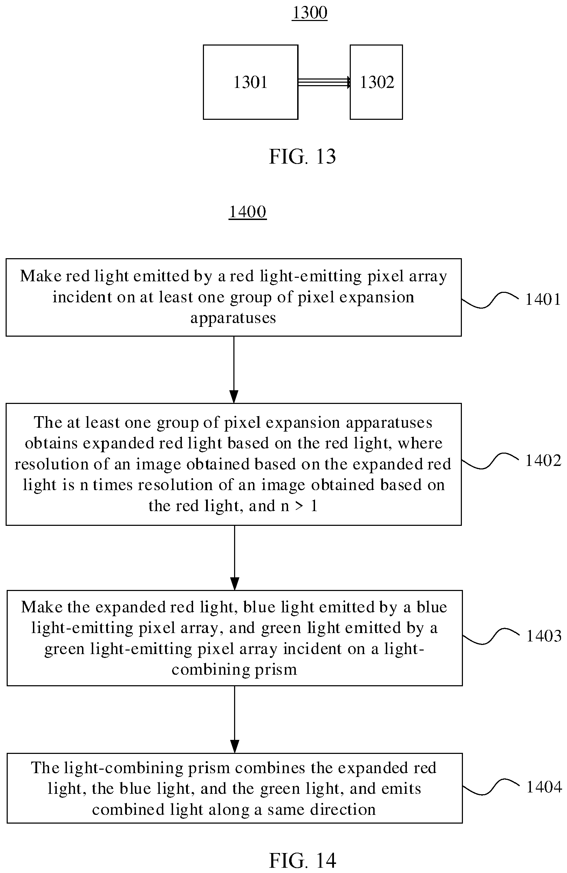

FIG. 13 is a diagram of an example structure of a full-color projection optical engine 1300 according to this application. As shown in FIG. 13, the full-color projection optical engine 1300 includes a projection display system 1301 and an optical combiner 1302. The projection display system 1301 may be the projection display system shown in any one of the embodiments in FIG. 2 to FIG. 12.

FIG. 14 is an example flowchart of a process 1400 of a projection display method according to this application. As shown in FIG. 14, the process 1400 may be performed by the projection display systems in the embodiments shown in FIG. 2 to FIG. 9. The process 1400 is described as a series of steps or operations. It should be understood that the steps or operations of the process 1400 may be performed in various orders and/or simultaneously, and are not limited to an execution order shown in FIG. 14. The process 1400 may include the following steps.

Step 1401: Make red light emitted by a red light-emitting pixel array incident on at least one group of pixel expansion apparatuses.

Step 1402: The at least one group of pixel expansion apparatuses obtains expanded red light based on the red light, where resolution of an image obtained based on the expanded red light is n times resolution of an image obtained based on the red light, and n > 1.

The at least one group of pixel expansion apparatuses performs different polarization on the red light at a plurality of moments to obtain red light that is in a plurality of polarized states. Optical paths of the red light that is in a plurality of polarized states are parallel but do not coincide. The expanded red light includes the red light that is in a plurality of polarized states.

Step 1403: Make the expanded red light, blue light emitted by a blue light-emitting pixel array, and green light emitted by a green light-emitting pixel array incident on a light-combining prism.

Step 1404: The light-combining prism combines the expanded red light, the blue light, and the green light, and emits combined light along a same direction.

For the projection display method provided in this embodiment of this application, refer to descriptions of the embodiments shown in FIG. 2 to FIG. 9. Details are not described herein again.

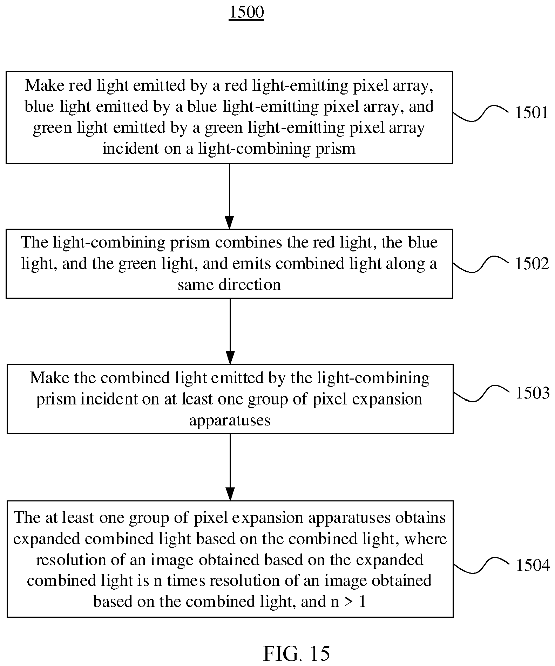

FIG. 15 is an example flowchart of a process 1500 of a projection display method according to this application. As shown in FIG. 15, the process 1500 may be performed by the projection display systems in the embodiments shown in FIG. 10 to FIG. 12. The process 1500 is described as a series of steps or operations. It should be understood that the steps or operations of the process 1500 may be performed in various orders and/or simultaneously, and are not limited to an execution order shown in FIG. 15. The process 1500 may include the following steps.

Step 1501: Make red light emitted by a red light-emitting pixel array, blue light emitted by a blue light-emitting pixel array, and green light emitted by a green light-emitting pixel array incident on a light-combining prism.

Step 1502: The light-combining prism combines the red light, the blue light, and the green light, and emits combined light along a same direction.

Step 1503: Make the combined light emitted by the light-combining prism incident on at least one group of pixel expansion apparatuses.

Step 1504: The at least one group of pixel expansion apparatuses obtains expanded combined light based on the combined light, where resolution of an image obtained based on the expanded combined light is n times resolution of an image obtained based on the combined light, and n > 1.

For the projection display method provided in this embodiment of this application, refer to descriptions of the embodiments shown in FIG. 10 to FIG. 12. Details are not described herein again.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

## Claims

1. A projection display system, comprising a red light-emitting pixel array, a blue light-emitting pixel array, a green light-emitting pixel array, and a light-combining prism, wherein the light-combining prism is disposed in optical paths of red light emitted by the red light-emitting pixel array, blue light emitted by the blue light-emitting pixel array, and green light emitted by the green light-emitting pixel array, and pixel dimensions of the blue light-emitting pixel array and pixel dimensions of the green light-emitting pixel array are both smaller than pixel dimensions of the red light-emitting pixel array;
at least one group of pixel expansion apparatuses is disposed between the red light-emitting pixel array and the light-combining prism;
the at least one group of pixel expansion apparatuses is configured to obtain expanded red light based on the red light, wherein resolution of an image obtained based on the expanded red light is n times resolution of an image obtained based on the red light, and n > 1; and
the light-combining prism is configured to: combine the expanded red light, the blue light, and the green light, and emit combined light along a same direction.

2. The system according to claim 1, wherein the at least one group of pixel expansion apparatuses is configured to perform different polarization on the red light at a plurality of moments to obtain red light that is in a plurality of polarized states, optical paths of the red light that is in a plurality of polarized states are parallel but do not coincide, and the expanded red light comprises the red light that is in a plurality of polarized states.

3. The system according to claim 2, wherein when there is only one group of pixel expansion apparatuses, the group of pixel expansion apparatuses is configured to perform first polarization on the red light at a first moment to obtain ordinary light, and perform second polarization on the red light at a second moment to obtain extraordinary light; and the expanded red light comprises the ordinary light and the extraordinary light.

4. The system according to claim 2, wherein when there are two groups of pixel expansion apparatuses, the two groups of pixel expansion apparatuses are configured to perform first polarization on the red light at a first moment to obtain red light that is in a first polarized state, perform second polarization on the red light at a second moment to obtain red light that is in a second polarized state, perform third polarization on the red light at a third moment to obtain red light that is in a third polarized state, and perform fourth polarization on the red light at a fourth moment to obtain red light that is in a fourth polarized state; and the expanded red light comprises the red light that is in the first polarized state, the red light that is in the second polarized state, the red light that is in the third polarized state, and the red light that is in the fourth polarized state.

5. The system according to any one of claims 2 to 4, wherein the pixel expansion apparatus comprises a polarization apparatus and a beam shifter;
the polarization apparatus is configured to convert first polarized light into second polarized light, wherein a polarized state of the second polarized light is different from a polarized state of the first polarized light, and the first polarized light comprises the red light; and
the beam shifter is configured to perform birefringence on the second polarized light, to obtain corresponding ordinary light and/or extraordinary light.

6. The system according to claim 5, wherein the polarization apparatus comprises two transparent electrodes and one liquid crystal molecular layer, and the liquid crystal molecular layer is disposed between the two transparent electrodes; and
when an electrical signal is applied to the transparent electrodes, liquid crystal molecules in the liquid crystal molecular layer rotate, to change the polarized state of the first polarized light and obtain the second polarized light.

7. The system according to claim 5 or 6, wherein when the second polarized light has characteristics of the ordinary light for the beam shifter, the beam shifter emits ordinary light corresponding to the second polarized light; and/or
when the second polarized light has characteristics of the extraordinary light for the beam shifter, the beam shifter emits extraordinary light corresponding to the second polarized light.

8. The system according to any one of claims 1 to 7, wherein an optical path length compensation device is disposed between the green light-emitting pixel array and the light-combining prism, and/or an optical path length compensation device is disposed between the blue light-emitting pixel array and the light-combining prism; and
the optical path length compensation device is configured to adjust a length of an optical path of incident light, wherein the incident light comprises the green light or the blue light.

9. The system according to any one of claims 1 to 7, wherein a distance between the blue light-emitting pixel array and the light-combining prism is changeable, and/or a distance between the green light-emitting pixel array and the light-combining prism is changeable.

10. The system according to any one of claims 1 to 9, wherein the red light-emitting pixel array comprises a self-emitting panel and a polarization selection device, or the red light-emitting pixel array comprises a self-emitting panel, a quantum dot material, and a polarization selection device, or the red light-emitting pixel array comprises a self-emitting panel and a quantum rod material, wherein
the self-emitting panel comprises a micron light-emitting diode panel or a micron organic light-emitting diode.

11. The system according to any one of claims 1 to 10, further comprising an optical engine lens, wherein the optical engine lens is configured to receive the combined light emitted from the light-combining prism, magnify an image formed by the combined light, and project a magnified image.

12. A projection display system, comprising a red light-emitting pixel array, a blue light-emitting pixel array, a green light-emitting pixel array, and a light-combining prism, wherein the light-combining prism is disposed in optical paths of red light emitted by the red light-emitting pixel array, blue light emitted by the blue light-emitting pixel array, and green light emitted by the green light-emitting pixel array;
the light-combining prism is configured to: combine the red light, the blue light, and the green light, and emit combined light along a same direction;
at least one group of pixel expansion apparatuses is disposed in an optical path of the combined light emitted by the light-combining prism; and
the at least one group of pixel expansion apparatuses is configured to obtain expanded combined light based on the combined light, wherein resolution of an image obtained based on the expanded combined light is n times resolution of an image obtained based on the combined light, and n > 1.

13. The system according to claim 12, wherein the at least one group of pixel expansion apparatuses is configured to perform different polarization on the combined light at a plurality of moments to obtain combined light that is in a plurality of polarized states, optical paths of the combined light that is in a plurality of polarized states are parallel but do not coincide, and the expanded combined light comprises the combined light that is in a plurality of polarized states.

14. The system according to claim 13, wherein when there is only one group of pixel expansion apparatuses, the group of pixel expansion apparatuses is configured to perform first polarization on the combined light at a first moment to obtain ordinary light, and perform second polarization on the combined light at a second moment to obtain extraordinary light; and the expanded combined light comprises the ordinary light and the extraordinary light.

15. The system according to claim 13, wherein when there are two groups of pixel expansion apparatuses, the two groups of pixel expansion apparatuses are configured to perform first polarization on the combined light at a first moment to obtain combined light that is in a first polarized state, perform second polarization on the combined light at a second moment to obtain combined light that is in a second polarized state, perform third polarization on the combined light at a third moment to obtain combined light that is in a third polarized state, and perform fourth polarization on the combined light at a fourth moment to obtain combined light that is in a fourth polarized state; and the expanded combined light comprises the combined light that is in the first polarized state, the combined light that is in the second polarized state, the combined light that is in the third polarized state, and the combined light that is in the fourth polarized state.

16. The system according to any one of claims 13 to 15, wherein the pixel expansion apparatus comprises a polarization apparatus and a beam shifter;
the polarization apparatus is configured to convert first polarized light into second polarized light, wherein a polarized state of the second polarized light is different from a polarized state of the first polarized light, and the first polarized light comprises the combined light; and
the beam shifter is configured to perform birefringence on the second polarized light, to obtain corresponding ordinary light and/or extraordinary light.

17. The system according to claim 16, wherein the polarization apparatus comprises two transparent electrodes and one liquid crystal molecular layer, and the liquid crystal molecular layer is disposed between the two transparent electrodes; and
when an electrical signal is applied to the transparent electrodes, liquid crystal molecules in the liquid crystal molecular layer rotate, to change the polarized state of the first polarized light and obtain the second polarized light.

18. The system according to claim 16 or 17, wherein when the second polarized light has characteristics of the ordinary light for the beam shifter, the beam shifter emits ordinary light corresponding to the second polarized light; and/or
when the second polarized light has characteristics of the extraordinary light for the beam shifter, the beam shifter emits extraordinary light corresponding to the second polarized light.

19. The system according to any one of claims 12 to 18, wherein a polarization selection device is disposed between the red light-emitting pixel array and the light-combining prism, and/or a polarization selection device is disposed between the blue light-emitting pixel array and the light-combining prism, and/or a polarization selection device is disposed between the green light-emitting pixel array and the light-combining prism.

20. The system according to any one of claims 12 to 18, wherein a polarization selection device is disposed between the light-combining prism and the at least one group of pixel expansion apparatuses.

21. The system according to any one of claims 12 to 20, wherein an active light-emitting pixel array comprises a self-emitting panel, or the active light-emitting pixel array comprises a self-emitting panel and a quantum dot material, or the active light-emitting pixel array comprises a self-emitting panel and a polarization selection device, or the active light-emitting pixel array comprises a self-emitting panel, a quantum dot material, and a polarization selection device, or the active light-emitting pixel array comprises a self-emitting panel and a quantum rod material, wherein the self-emitting panel comprises a micron light-emitting diode panel or a micron organic light-emitting diode panel, and the active light-emitting pixel array is the red light-emitting pixel array, the green light-emitting pixel array, or the blue light-emitting pixel array.

22. The system according to any one of claims 12 to 21, further comprising an optical engine lens, wherein the optical engine lens is configured to receive the expanded combined light, magnify an image formed by the expanded combined light, and project a magnified image.

23. A full-color projection optical engine, comprising the projection display system according to any one of claims 1 to 22.

24. A projection display method, wherein the method is used in the projection display system that is according to any one of claims 1 to 11, and the method comprises:
making red light emitted by the red light-emitting pixel array incident on the at least one group of pixel expansion apparatuses;
obtaining, by the at least one group of pixel expansion apparatuses, expanded red light based on the red light, wherein resolution of an image obtained based on the expanded red light is n times resolution of an image obtained based on the red light, and n > 1;
making the expanded red light, blue light emitted by the blue light-emitting pixel array, and green light emitted by the green light-emitting pixel array incident on the light-combining prism; and
combining, by the light-combining prism, the expanded red light, the blue light, and the green light, and emitting combined light along a same direction.

25. The method according to claim 24, wherein the obtaining, by the at least one group of pixel expansion apparatuses, expanded red light based on the red light comprises:
performing, by the at least one group of pixel expansion apparatuses, different polarization on the red light at a plurality of moments to obtain red light that is in a plurality of polarized states, wherein optical paths of the red light that is in a plurality of polarized states are parallel but do not coincide, and the expanded red light comprises the red light that is in a plurality of polarized states.

26. A projection display method, wherein the method is used in the projection display system that is according to any one of claims 12 to 22, and the method comprises:
making red light emitted by the red light-emitting pixel array, blue light emitted by the blue light-emitting pixel array, and green light emitted by the green light-emitting pixel array incident on the light-combining prism;
combining, by the light-combining prism, the red light, the blue light, and the green light, and emitting combined light along a same direction;
making the combined light emitted by the light-combining prism incident on the at least one group of pixel expansion apparatuses; and
obtaining, by the at least one group of pixel expansion apparatuses, expanded combined light based on the combined light, wherein resolution of an image obtained based on the expanded combined light is n times resolution of an image obtained based on the combined light, and n > 1.

27. The method according to claim 26, wherein the obtaining, by the at least one group of pixel expansion apparatuses, expanded combined light based on the combined light comprises:
performing, by the at least one group of pixel expansion apparatuses, different polarization on the combined light at a plurality of moments to obtain combined light that is in a plurality of polarized states, wherein optical paths of the combined light that is in a plurality of polarized states are parallel but do not coincide, and the expanded combined light comprises the combined light that is in a plurality of polarized states.
